# EUROPEAN PATENT APPLICATION

(11) **EP 4 593 156 A1**
(43) Date of publication of application: **30.07.2025**
(21) Application number: 24154542.5
(22) Date of filing: 29.01.2024
(51) Int. Cl.: H01M 10/613, H01M 10/625, H01M 10/6553, H01M 10/6556, H01M 10/6557, H01M 50/213

(54) **TERMINAL BLOCK FOR A BATTERY PACK, BATTERY PACK AND ELECTRIC SYSTEM COMPRISING BATTERY PACK**

(71) Applicant: Rimac Technology LLC, 10431 Sveta Nedelja (HR)
(72) Inventor: Anil Kumar, Nikhil Setty, 577101 Karnataka (IN)
(74) Representative: Sonnenberg Harrison Partnerschaft mbB

(57) **Abstract**

A terminal block for a battery pack, a battery pack and an electric system comprising the battery pack, wherein the terminal block comprises a first terminal member having an inlet port connecting an inner side and an outer side of the terminal block, a distribution cavity, connected with the inlet port and provided on the first terminal member at the inner side, and a plurality of vent ports provided on the outer side and connected with the inner side. The inlet port and the distribution cavity provide at least part of a first pathway. The plurality of vent ports provides at least part of a second pathway.

## Description

### FIELD OF THE INVENTION

This invention relates in general to the technical field of electric energy storage systems, such as batteries or battery packs for electric systems, and in particular to terminal block of such battery packs.

### BACKGROUND OF THE INVENTION

Batteries or electric energy storage systems are increasingly used to power various components in electric systems such as stationary power constructions or vehicle constructions, especially hybrid and electric vehicles.

Batteries consist of individual battery cells or energy storage units, typically arranged within a housing and secured by a holder. Mechanical stability and rigidity and a robust design of the batteries are beneficial to preserving overall system safety and ensuring optimal performance while minimizing the risk of damage or failure during mechanical stress. Robust housing materials and design are beneficial for protecting the delicate and costly internal components and preventing hazardous situations, like short circuits or thermal runaway. Adequate cooling and thermal management systems are necessary to maintain optimal operating conditions. At the same time, the housing seals the battery from the environment.

Challenges with injection molding of non-conductive components of batteries or for tools with short lead times are well known. Introducing changes to system dimensions requires the creation of new tooling and a complex and time intensive development process. Combined with specific design requirements to maintain optimal and safe operating conditions, this constraint has a negative impact on tooling and supply chain costs, as well as manufacturing lead times, reducing efficiency and flexibility to adapt to changing requirements.

KR 2022 0 125 097 A discloses a battery module comprising a battery cell stack in which a plurality of battery cells are stacked, a module frame in which the battery cell stack is accommodated, and a first end plate and a second end plate that are combined with the module frame and cover the front and rear surfaces of the battery cell stack, respectively. A terminal bus bar opening is formed in the first end plate, and a filler for suppression of flame is filled between the first end plate and the battery cell stack. An injection hole for injecting the filler may be formed in the first end plate.

The purpose of the filler is to offer structural support, provide vibration dampening, enhance thermal management, ensure effective sealing and encapsulation, and prevent internal movement within the battery housing, contributing to improved overall performance and safety. The filler is commonly in liquid form when injected and expands as it cures or hardens. The viscosity of the liquid filler depends on the material it is made from, most commonly a two-component filler.

CN 217691491 U discloses a square battery cell module utilizing end plates to fill glue. The end plates are provided with glue filling holes so as to fill glue into glue supply channels of the end plates, and the glue flows through the glue supply channels, flows to glue inlet ports of the side plates through glue outlet ports, and flows downwards through the longitudinal channels of the side plates. The transverse flow channels on the side plates are gradually filled, meanwhile, gas can be rapidly exhausted through the longitudinal flow channels.

In contrast to the prior art, there is a notable absence of a battery pack that concurrently enhances mechanical stability, safety, and efficiency while also advancing adaptability and flexibility.

The primary objective of the present invention is to provide a battery pack with a mechanically stable and robust design, incorporating safety measures to mitigate the risk of hazardous situations, while ensuring easy adaptability to different system dimensions without the need for extensive tooling changes, thereby increasing flexibility, efficiency and overall system resilience.

### SUMMARY OF THE INVENTION

The above objective is solved by a terminal block which comprises a first terminal member having an inlet port connecting an inner side and an outer side of the terminal block, a distribution cavity, connected with the inlet port and provided on the first terminal member at the inner side, and a plurality of vent ports provided on the outer side and connected with the inner side. The inlet port and the distribution cavity provide at least part of a first pathway. The plurality of vent ports provides at least part of a second pathway.

Having different pathways provides different options for functionality.

In a first aspect, the first pathway and the second pathway are not in fluid contact with each other.

The provision of separated pathways eliminates cross-contamination and maintaining the integrity of each function.

In another aspect, the terminal block further comprises a second terminal member, being different from the first terminal member, wherein the second terminal member comprises the distribution cavity at the inner side and second connection elements.

In another aspect, the first terminal member comprises one of first connection elements or second connection elements and the second terminal member comprises the other one of first connection elements or second connection elements, wherein the second terminal member and the first terminal member are detachably attached by the first connection elements and second connection elements.

Being detachably attached to each other provides flexibility in the production, reduction of tooling costs, and advantages for maintenance.

In another aspect, the terminal block further comprises at least one intermediate terminal member, being different from the first terminal member, wherein the at least one intermediate terminal member comprises the distribution cavity at the inner side, the first connection elements and/or the second connection elements, as well as at least one vent port.

With the intermediate terminal member, the terminal block can be stacked so as to be easily adaptable to a different battery pack size or to changing dimensional requirements, resulting in faster manufacturing time with reduced tooling costs.

In another aspect the at least one intermediate terminal member is detachably attached between the first terminal member and the second terminal member by the first connection elements and the second connection elements.

Thus, a stable and secure detachable connection between the members can be established.

In another aspect, the terminal block further comprises a plurality of interface extensions extending on the inner side and providing a fluid connection with the vent ports defining at least part of the second pathway.

Thus, part of the second pathway is defined to extend from the outer side of the terminal block to the inner side through the vent ports and the interface extension.

In another aspect, at least one of the first terminal member, the second terminal member and the intermediate terminal member comprise fastening pins, wherein the fastening pins fastens a busbar to at least one of the first terminal member, the second terminal member and the intermediate terminal member.

The provision and fastening of the busbar to the terminal block facilitates the stability and rigidity of the terminal block as well as provides an electrical interface.

In another aspect, at least one of the first terminal member, the second terminal member and the intermediate terminal member comprises at least one grounding port connecting the inner side and the outer side.

The grounding port provides a designated connection point for grounding, supporting to prevent electrical shock hazards, improving the electromagnetic compatibility of the battery pack, and dissipating static charges.

In another aspect, the terminal block further comprises a plurality of support members at the inner side, and a main datum provided at the first terminal member.

The support members and the main datum provide interconnection possibilities to further components, supporting the overall stability.

In another aspect, the terminal block further comprises a battery management system and a plurality of mounting holes at the outer side, wherein the battery management system is mounted to the first terminal member via the mounting holes.

The integration of the battery management system directly at the terminal block allows for a more compact design and simpler installation processes, shorter wiring and signal paths, and more effective thermal management.

The above objective is further solved by a battery pack. The battery pack comprises the terminal block, a base plate comprising a surface, a plurality of recesses and at least one inner channel, a plurality of energy storage units disposed on the surface, and a plurality of cooling snakes contacting at least one of the plurality of energy storage units. The terminal block and the base plate provide a first pathway and a second pathway. The first pathway and the second pathway are not in fluid contact with each other.

Having different pathways provides different options for functionality. The provision of separated pathways eliminates cross-contamination and maintaining the integrity of each function.

In an aspect, the first pathway is defined by an inlet port and a distribution cavity of the terminal block and the plurality of recesses, and the second pathway is defined by the at least one inner channel and vent ports of the terminal block.

The first pathway provides a path from the outer side to the inner components of the battery pack while the second path provides a path from the at least one inner channel of the base plate to the outside, thus resulting in an increased safety and overall system resilience.

In another aspect, the cooling snakes are supported at the battery pack by support members of the terminal block.

The supported cooling snakes provide themselves a support for the plurality of energy storage units resulting in an overall stability and the possibility of in-situ injection of a filler.

In another aspect, the cooling snakes are connected to a grounding port of the terminal block by a wire and wherein the wire is disposed in the distribution cavity.

The connection to the grounding port increases the safety of the battery pack and the provision of the wires in the distribution cavity provide a compact design.

In another aspect, the battery pack further comprises a rear block provided opposite to the terminal block. The rear block comprises a first rear member having at least one of a coolant inlet port and a coolant outlet port connecting the inner side and the outer side of the rear block, and a plurality of vent ports provided on the outer side and connected with the inner side. The plurality of vent ports of the rear block is part of the second pathway.

The rear block facilitates the mechanically stable and robust design and incorporates with the second pathway a safety measure to mitigate the risk of hazardous situations.

In another aspect, the battery pack further comprises an interconnection connecting at least one energy storage cell with a battery management system of the terminal block.

By connecting the interconnection with the energy storage units and the battery management system, the battery pack becomes fully operable for the use in different electronical systems.

The above objective is further solved by an electric system comprising the battery pack.

The electronic system enables the storage or provision of electric energy independently of a power grid in vehicles or a stationary system.

### DESCRIPTION OF THE FIGURES

A more complete understanding of the invention and many of the advantages associated therewith may be readily obtained by reference to the following detailed description in conjunction with the enclosed figures.
Fig. 1 is an illustration of a terminal block according to a first embodiment from a first perspective.
Fig. 2 is an illustration of the terminal block from a second perspective.
Fig. 3 is an illustration of a part of a first terminal member and a second terminal member of the terminal block.
Fig. 4 is an exploded view of a terminal block according to a second embodiment.
Fig. 5 is another illustration of the terminal block of Fig. 1.
Fig. 6 is a cross-sectional top view of a part of a battery pack.
Fig. 7 is a perspective illustration of a part of the battery pack.
Fig. 8 is a cross-sectional side view of a part of the battery pack.
Fig. 9 is a perspective illustration of the battery pack.
Fig. 10 is an illustration of a rear block according to a first embodiment from a first perspective.
Fig. 11 is an illustration of the rear block from a second perspective.
Fig. 12 is a schematic illustration of an electronic system.

### DETAILED DESCRIPTION OF THE INVENTION

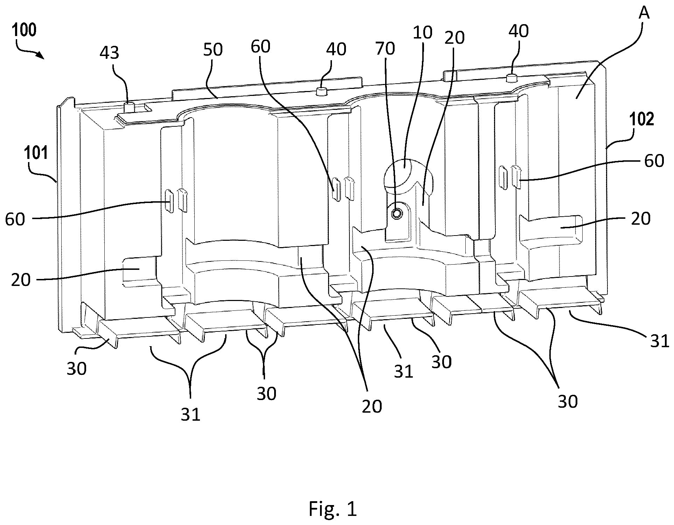

Fig. 1 shows a terminal block 100 according to a first embodiment from a first perspective. The terminal block 100 comprises a first terminal member 101 and a second terminal member 102, wherein the second terminal member 102 is different from the first terminal member 101. In another embodiment the terminal block 100 could also comprise only the first terminal member 101.

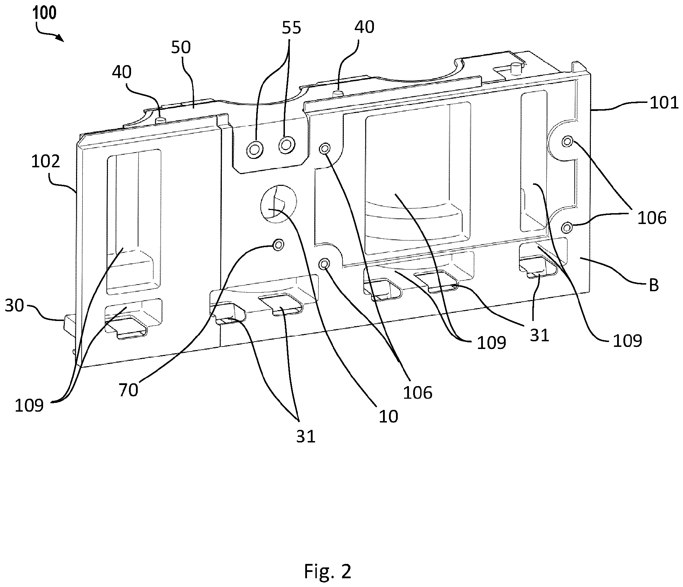

The first terminal member 101 has an inlet port 10. The inlet port 10 connects an inner side A and an outer side B (see Fig. 2) of the terminal block 100. The inlet port 10 is configured to provide a primary inlet hole for injecting a filler. The inlet port 10 can include an adapter for the injection of the filler (not shown). After injection of the filler, the inlet port 10 can be sealed with a seal or cover (not shown) to prevent the filler from escaping through the inlet port 10.

The terminal block 100 comprises a distribution cavity 20 connected with the inlet port 10. The distribution cavity 20 is provided as a channel in the first terminal member 101 and the second terminal member 102 and is configured to facilitate the distribution of the injected filler at the inner side A of the terminal block 100. The inlet port 10 and the distribution cavity 20 provide at least part of a first pathway PW1 for the injected filler. In a non-limiting example, the distribution cavity 20 extends in a way, which facilitates uniform distribution of the filler from the inlet port 10 to the inner side A of the terminal block 100. In another non-limiting example, the distribution cavity 20 extends from below the inlet port 10 in a vertical or first direction and continues in a horizontal or second direction, being perpendicular to the first direction, along the first terminal member 101 and the second terminal member 102.

The terminal block 100 further comprises a plurality of vent ports 31 and a plurality of interface extensions 30 extending on the inner side A. The plurality of vent ports 31 are provided on the outer side B of the terminal block 100 and connect with the inner side A. The plurality of vent ports 31 are connected on the inner side A such to be in fluid connection with the plurality of interface extensions 30. The plurality of vent ports 31 provide at least part of a second pathway PW2. The plurality of vent ports 31 define with the plurality of interface extensions 30 at least part of the second pathway PW2.

As discussed later, the terminal block 100 further comprises a plurality of support members 60 at the inner side A, fastening pins 40, a main datum 43, a busbar 50, and at least one grounding port 70.

Fig. 2 shows the terminal block 100 from a second perspective. The terminal block 100 further comprises fastening holes 55 and a plurality of mounting holes 106 at the outer side B. The fastening holes 55 are provided at the outer side at the busbar 50 and provide an interface for other components. The terminal block 100 is designed such to be manufactured in a lightweight and material-saving way. In this regard, the first terminal member 100 and the second terminal member comprise upper and lower protrusions 109. The upper protrusions 109 are provided in an upper area of the terminal block 100 and the lower protrusions 109 are provided in a lower area of the terminal block 100, when seen in the first direction. The plurality of vent ports 31 extend into the lower protrusions 109.

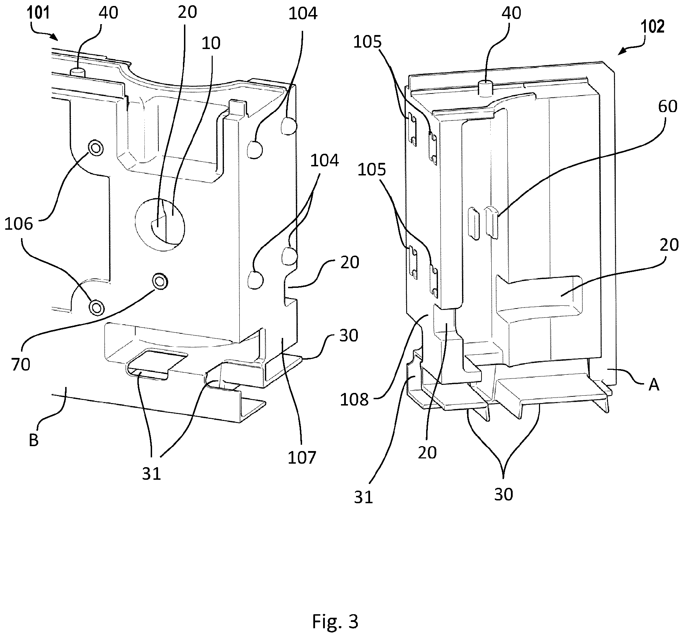

Fig. 3 shows the terminal block 100 according to a first embodiment comprising the first terminal member 101 and the second terminal member 102 in an exploded view. In Fig. 3, part of the first terminal member 101 is illustrated from the outer side B and part of the second terminal member 102 is illustrated from the inner side A. The first terminal member 101 comprises a first connection surface 107. The second terminal member 102 comprises a second connection surface 108. In one non-limiting example, the first terminal member 101 comprises on the first connection surface 107 a plurality of first connection elements 104, and the second terminal member 102 comprises on the second connection surface 108 a plurality of second connection elements 105. However, in another non-limiting example, the first terminal member 101 comprises on the first connection surface 107 the second connection elements 105, and the second terminal member 102 comprises on the second connection surface 108 the first connection elements 104. Thus, the first terminal member 101 comprises one of first connection elements 104 or second connection elements 105, and the second terminal member 102 comprises the other one of first connection elements 104 or second connection elements 105. The first connection elements 104 provide a male connection part and the second connection elements 105 provide a female connection part. Examples of the male/female connection of the first connection element 104 and the second connection element 105 are all configurations which provide a stable and secure detachable connection, such as for non-limiting example, protrusion and projection, snap-fit head and receptacle, interlocking tabs, hook and latch, or a bayonet mount. The first connection elements 104 and the second connection elements 105 are designed to detachably attach to each other in an easy way. In a non-limiting example, the attachment is done by application of compression force resulting in the ability of stacking the first, second and/or intermediate terminal members 101, 103, 102. In another non-limiting example, the stacking is done by positioning the first, second and/or intermediate terminal members 101, 103, 102 via the first connection elements 104 and the second connection elements 105 by placing without applying force. The stacking of the first, second and/or intermediate terminal members 101, 102, 103 can be done without additional fasteners. Thus, the second terminal member 102 and the first terminal member 101 are detachably attached by the first connection elements 104 and second connection elements 105. At the connection surface 107, 108 the vent port 31 and the interface extension 30 are split in half because of constructional reasons, as it will be described later.

The first terminal member 101 comprises the at least one grounding port 70. The at least one grounding port 70 connects the inner side A and the outer side B of the terminal block 100 and provides an interface for a plurality of cooling snakes 65. The at least one grounding port 70 can be configured as a metal heat-staked insert. In another embodiment, at least one of the first terminal member 101, the second terminal member 102 and the intermediate terminal member 103 comprises the at least one grounding port 70.

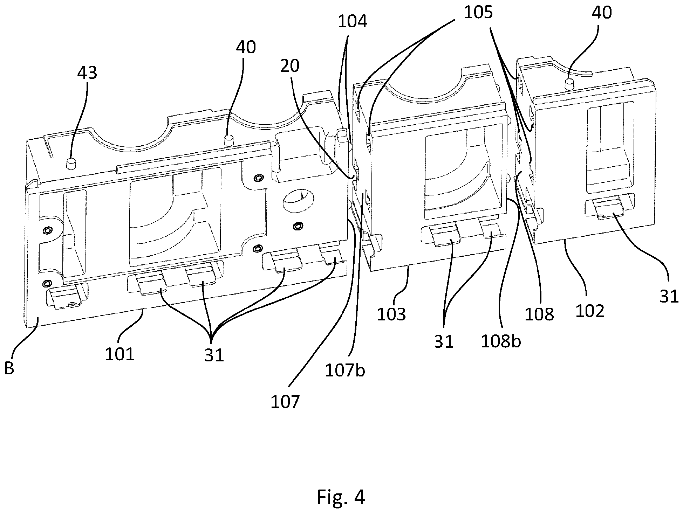

Fig. 4 shows an exploded view of the terminal block 100 according to a second embodiment from the outer side B. The terminal block 100 further comprises at least one intermediate terminal member 103, wherein the intermediate terminal member 103 is different from the first terminal member 101. The at least one intermediate terminal member 103 comprises a first connection surface 107b and a second connection surface 108b. The intermediate terminal member 103 comprises one of the first connection elements 104 or second connection elements 105, and the second terminal member 102 comprises the other one of first connection elements 104 or second connection elements 105. The at least one intermediate terminal member 103 is detachably attached between the first terminal member 101 and the second terminal member 102 by the first connection elements 104 and the second connection elements 105, respectively. In an example, more than one intermediate terminal members 103 can be detachably attached between the first terminal member 101 and the second terminal member 102. In a non-limiting example, two or three intermediate terminal members 103 are detachably attached between the first terminal member 101 and the second terminal member 102. In this case, one after another terminal member 103, 102 is detachably attached to the first terminal member 101 via the first connection elements 104 and second connection elements 105. Such a configuration allows for a modular extension in the width of the terminal block 100 resulting in an easy and flexible adaptability to different system dimensions without the need for extensive tooling changes and costs.

The at least one intermediate terminal member 103 further comprises the distribution cavity 20 at the inner side A. The distribution cavity 20 of the at least one intermediate terminal member 103 is in fluid connection with the distribution cavity 20 of the first terminal member 101 and the second terminal member 102, thus, providing a unitary distribution cavity 20 to the terminal block for facilitation of the distribution of the injected filler. The distribution cavity 20 of the at least one intermediate terminal member 103 is part of the first pathway PW1. The at least one intermediate terminal member 103 further comprises at least one vent port 31, whereby the at least one vent port 31 of the at least one intermediate terminal member 103 is part of the second pathway PW2.

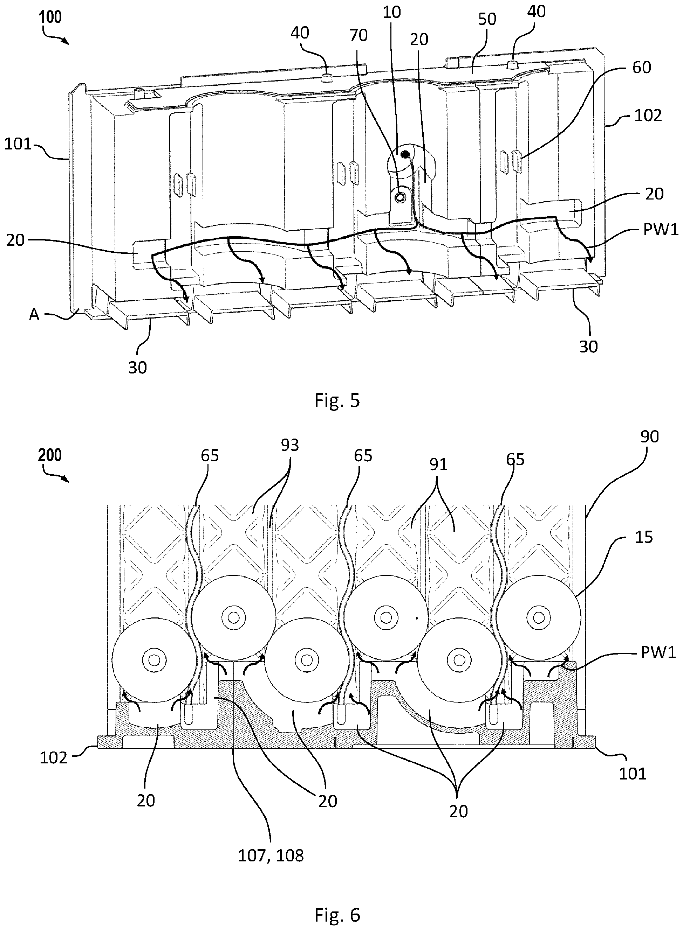

Fig. 5 shows another illustration of the terminal block of Fig. 1. Here, the first pathway PW1 is illustrated in part as an arrowed line. The first pathway PW1 starts from the inlet port 10 and extends via the distribution cavity 20 of the terminal block 100 on the inner side A. The first pathway PW1 defines the distribution path of the filler upon injection through the inlet port 10. In a non-limiting example, the first pathway PW1 extends from the inlet port 10 along the distribution cavity 20 and from the distribution cavity 20 to the inner side A of the terminal block 100. The first pathway PW1 provides a uniform distribution of the injected filler.

Fig. 6 shows a part of a battery pack 200 comprising the terminal block 100. The battery pack 200 further comprises a base plate 90 and a plurality of energy storage units 15. The energy storage units 15 have a cylindrical shape. The base plate 90 comprises a surface 91 and a plurality of recesses 93. The plurality of recesses 93 are configured to provide stability to the surface 91 and can comprise different kinds of shapes. The plurality of energy storage units 15 is disposed on the surface 91. In a non-limiting example, the surface 91 comprises weakened points or breakage points (not shown) below the energy storage unit 15. In a non-limiting example, the weak or breaking points are one of a membrane or an area of thinner material that bursts or breaks at a predetermined pressure or load. The battery pack 200 further comprises a plurality of cooling snakes 65 which are in contact with at least one of the plurality of energy storage units 15. The plurality of cooling snakes 65 are in contact with the at least one of the plurality of energy storage units 15 along a longitudinal axis of the cylindric energy storage units 15. The cooling snakes 65 are supported and/or located at the battery pack 200 by the support members 60 of the terminal block 100. The support members 60 can be any kind of members that are configured to support the cooling snakes 65 in the battery pack 200 by providing a fixation. The supported cooling snakes 65 provide themselves a support for the plurality of energy storage units 15 resulting in an overall stability and the possibility of in-situ injection of the filler. The support members 60 are in the simplest form protrusions on the inner side A of the terminal block 100 (see Fig. 5). In a case where cold plates are used instead of cooling snakes 65, the support members 60 can be omitted.

The plurality of cooling snakes 65 are connected to the at least one grounding port 70 of the terminal block 100 by wires 67. The plurality of energy storage units 15 generate heat during charging and discharging cycles. Elevated temperatures can affect the performance, efficiency, and lifespan of one of the energy storage units 15. The cooling snakes 65 can accumulate the heat of the energy storage units 15 to maintain the energy storage units 15 within a desired temperature range.

The first pathway PW1 continues from the distribution cavity 20 of the terminal block 100 towards the surface 91 of the base plate 90 in between interstitial gaps of the plurality of energy storage units 15 and the cooling snakes 65. At the surface, the first pathway PW1 further continues in the recesses 93 of the base plate 91 below and in between interstitial gaps of the plurality of energy storage units 15 and the cooling snakes 65. Consequently, the first pathway PW1 starts at the inlet port 10 and distributes across the whole battery pack 200 within interstitial gaps of the components of the battery pack 200. Thus, the filler can be uniformly distributed throughout the dimensionally adjustable battery pack 200, ensuring a mechanically stable and robust design. The cured or expanded filler allows structural integrity to be maintained without the need for additional fasteners.

As can be further seen in Fig. 6, the terminal block 100 is split at the first and second connection surfaces 107, 108 at a location central to one of the plurality of energy storage cells 15. Thus, an area of the first and second connection surfaces 107, 108 can be such that more connection elements 104, 105 can be provided. Also, the location of the split ensures that the first pathway PW1 is split evenly around the energy storage cells 15, resulting in increased stability and robustness after the filler cures.

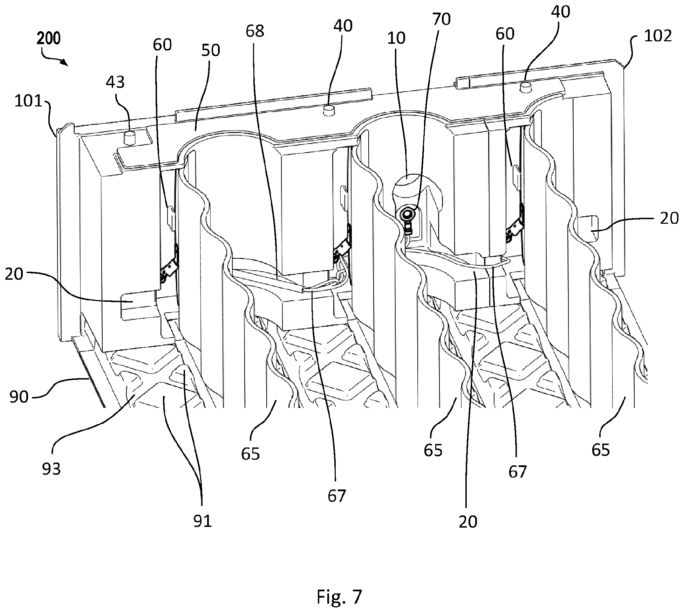

Fig. 7 shows a perspective illustration of a part of the battery pack 200. The wires 67 are disposed in the distribution cavity 20 and provide a grounding harness for the plurality of cooling snakes 65. The wires 67 are mounted in a holder 68 for easier manufacture.

At least one of the first terminal member 101, the intermediate terminal member 103, and the second terminal member 102 comprise the fastening pins 40. The fastening pins 40 define a mounting location for the busbar 50. The busbar 50 is fastened to least one of the first terminal member 101, the intermediate terminal member 103 and the second terminal member 102 by the fastening pins 40. In a non-limiting example, the busbar 50 is fastened or secured by heat staking the fastening members 40. The busbar 50 carries the battery pack terminal voltage.

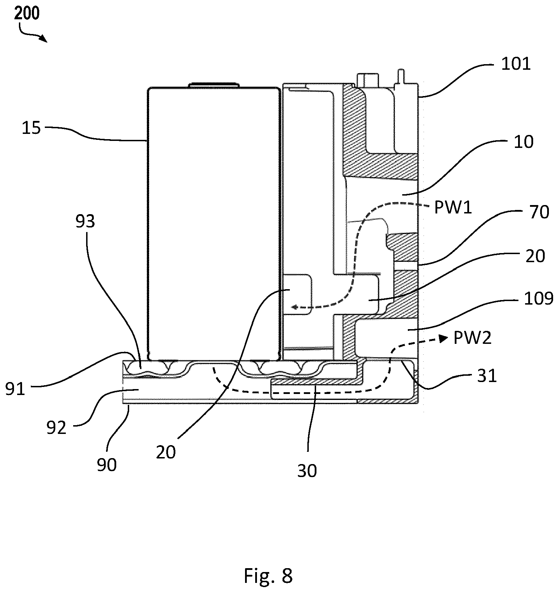

Fig. 8 shows a cross-sectional side view of a part of the battery pack 200. The base plate 90 comprises at least one or a plurality of inner channels 92. The plurality of interface extensions 30 extend into the at least one inner channel 92. The plurality of interface extensions 30 can help to position at least one of the first, second and/or intermediate terminal member 101, 102, 103 with respect to the base plate 90 during the assembly of the battery pack 200. The at least one inner channel 92, the interface extensions 30 and the vent ports 31 define the second pathway PW2. The second pathway PW2 and the first pathway PW1 are not in fluid contact with each other. The second pathway PW2 provides a safe way for vent gas in the event of a thermal runaway. Thermal runaway in the context of electric energy storage systems such as battery packs is a self-perpetuating and uncontrolled escalation of temperature within a battery cell, driven by a positive feedback loop of heat generation and chemical reactions. This phenomenon can lead to a rapid and dangerous increase in temperature, potentially resulting in release of gases, catastrophic failure, and a heightened risk of fire or explosion. In the event of thermal runaway, the pressure within the battery pack 200 can escape from the inside of the battery pack 200 via the small holes or breakage points of the base plate 90 through the second pathway PW2 to the outside of the battery pack 200. Thus, the second pathway PW2 provides a safety measure to mitigate the risk of hazardous situations.

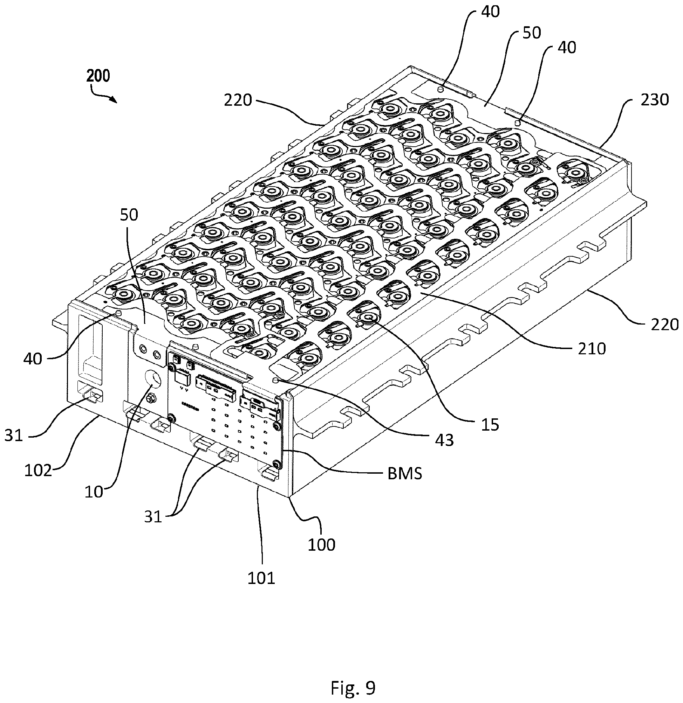

Fig. 9 shows a perspective view of the battery pack 200. The battery pack 200 further comprises mounting brackets 220 and a rear block 230. The base plate 90, the terminal block 100, the mounting brackets 220 and the rear block 230 define a case or box in which the plurality of energy storage units 15 and the cooling snakes 65 with the wires 67 are placed. The rear block 230 is provided opposite to the terminal block 100.

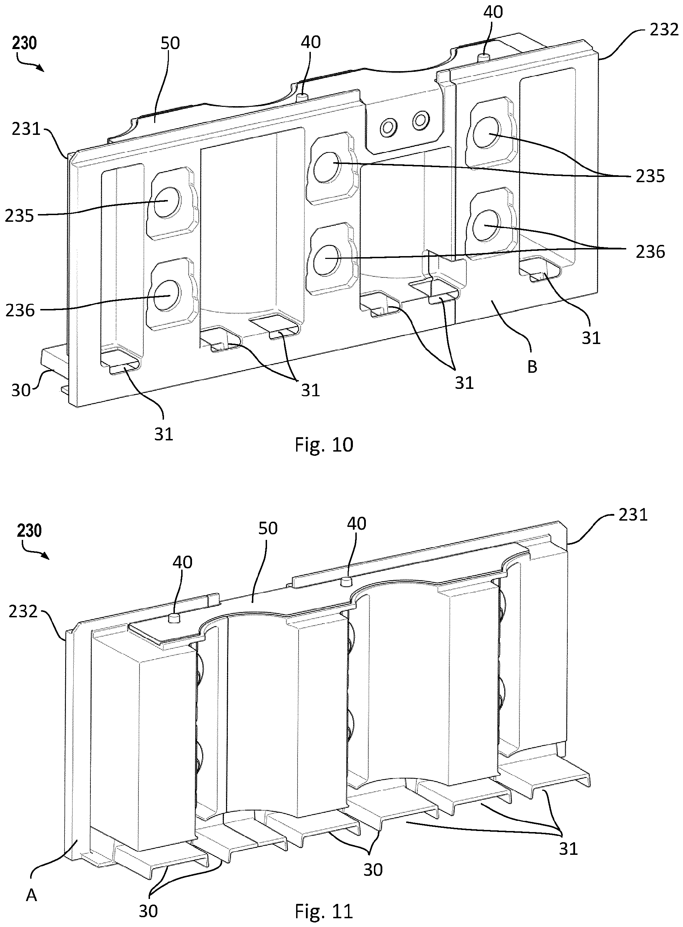

As seen in Fig. 10 and 11, the rear block 230 comprises at least a first rear member 231 and a second rear member 232. The rear block 230 can also comprise an intermediate rear member (not shown) detachably attached between the first and second rear members 231, 232 via connection elements 104, 105. The rear block 230 is adaptable to the same length or width as the terminal block 100. The rear member 231 has at least one of a coolant inlet port 235 and a coolant outlet port 236 connecting an inner side A and an outer side B of the rear block 230. A coolant can be introduced to the cooling snakes 65 of the battery pack 200 through the coolant inlet port 235 and drained from the battery pack through the coolant outlet port 236. The coolant helps to maintain optimum operating temperatures within the battery pack 200, avoiding excessive heat which can affect the performance, safety and life of the battery pack 200. The rear block 230 further comprises the plurality of vent ports 31 and the plurality of interface extensions 30 extending on the inner side A. The plurality of vent ports 31 of the rear block 230 is part of the second pathway PW2. The rear block 230 further comprises supporting members 60. In a case where cold plates are used instead of cooling snakes 65, the support members 60 can be omitted. The rear block 230 also comprises fastening pins 40. The fastening pins 40 of the rear block 230 define a mounting location for another busbar 50. The busbar 50 is fastened to the rear block 230 by the fastening pins 40. In a non-limiting example, the busbar 50 is fastened or secured the rear block 230 by heat staking the fastening members 40.

The terminal block 100 comprises a battery management system BMS. The battery management system BMS is mounted to the first terminal member 101 via the mounting holes 106. The mounting can be done by any type of known fasteners. The battery management system BMS is connected to each of the plurality of energy storage cells 15 via an interconnection 210. The interconnection is aligned or positioned to the battery pack 200 by the main datum 43 of the terminal block 100 and the busbar 50 of the rear block 230 and is fastened or secured to the plurality of energy storage units 15 by soldering or welding. The interconnection 210 is made of a conductive material. The battery management system BMS can be also connected to the grounding port 70. The battery management system BMS is responsible for monitoring individual cell parameters such as voltage and temperature, balancing cell charges, estimating State of Charge and State of Health, protecting against overcharge and overdischarge, regulating temperature, facilitating communication with external systems, detecting faults, ensuring safety features, and controlling the charge and discharge processes, collectively optimizing the performance, safety, and longevity of a battery pack.

The battery pack 200 provides a mechanically stable and robust design when the filler is injected through the inlet port 10, distributed via the first pathway PW1 and expands when curing. With the second pathway PW2 being separated and not in fluid contact with the first pathway PW1, the battery pack provides an incorporated safety measure to mitigate the risk of hazardous situations. The possibility of stacking the terminal block 100 and the rear block 230, respectively, ensures an easy adaptability of the battery pack 200 to different system dimensions without the need for extensive tooling changes. Being independent of battery pack size or dimension requirements, the terminal block 100 and the rear block 230, respectively, eliminate the need for unique parts for different battery pack sizes. Thus, any size or dimension requirement of the battery pack 200 can be built using the stackable terminal block 100 and rear block 230 with a fixed set of total tooling/mould count. In other words, due to the modular nature of the terminal block 100, the tooling required for manufacturing its members 101, 102, 103 remains constant regardless of the battery pack size, resulting in a fixed tooling/mould count while the total part count of the battery pack 200 can vary based on the size or dimensional requirements. Altogether, the battery pack 200 provides an increased flexibility, efficiency and overall system resilience.

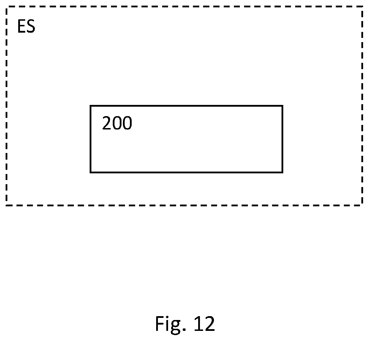

Fig. 12 shows a schematic illustration of an electric system ES comprising the battery pack 200. The electric system ES can be one of a vehicle or a stationary system. If the electric system ES is a vehicle, it can be any air, land, or water vehicle. If the electric system ES is a stationary system, it can be any structure that enables the storage or provision of electric energy independently of a power grid.

**Reference signs**

| | | | |
|---|---|---|---|
| 100 | terminal block | A | inner side |
| 101 | first terminal member | B | outer side |
| 102 | second terminal member | ES | electric system |
| 103 | intermediate terminal member | PW1 | first pathway |
| 104 | first connection elements | PW2 | second pathway |
| 105 | second connection elements | 90 | base plate |
| 106 | mounting hole | 91 | surface |
| 107 | first connection surface | 92 | at least one inner channel |
| 108 | second connection surface | 93 | recesses |
| 109 | protrusion | 200 | battery pack |
| 10 | inlet port | 210 | interconnection |
| 15 | energy storage units | 220 | mounting brackets |
| 20 | distribution cavity | 230 | rear block |
| 30 | interface extensions | 231 | first rear member |
| 31 | vent ports | 232 | second rear member |
| 40 | fastening pins | 235 | coolant inlet port |
| 43 | main datum | 236 | coolant outlet port |
| 50 | busbar | | |
| 55 | fastening holes | | |
| 60 | support member | | |
| 65 | cooling snake | | |
| 67 | wire | | |
| 68 | holder | | |
| 70 | grounding port | | |

## Claims

1. Terminal block (100) comprising:
a first terminal member (101) having an inlet port (10) connecting an inner side (A) and an outer side (B) of the terminal block (100);
a distribution cavity (20), connected with the inlet port (10) and provided on the first terminal member (101) at the inner side (A); and
a plurality of vent ports (31) provided on the outer side (B) and connected with the inner side (A);
wherein the inlet port (10) and the distribution cavity (20) provide at least part of a first pathway (PW1), and wherein the plurality of vent ports (31) provide at least part of a second pathway (PW2).

2. Terminal block (100) according to claim 1, wherein
the first pathway (PW1) and the second pathway (PW2) are not in fluid contact with each other.

3. Terminal block (100) according to claim 1 or 2, further comprising:
a second terminal member (102), being different from the first terminal member (101), the second terminal member (102) comprises the distribution cavity (20) at the inner side (A) and second connection elements (105).

4. Terminal block (100) according to any of claims 1 to 3, wherein
the first terminal member (101) comprises one of first connection elements (104) or second connection elements (105) and the second terminal member (102) comprises the other one of first connection elements (104) or second connection elements (105), wherein
the second terminal member (102) and the first terminal member (101) are detachably attached by the first connection elements (104) and second connection elements (105).

5. Terminal block (100) according to any one of claims 1 to 4, further comprising:
at least one intermediate terminal member (103), being different from the first terminal member (101), the at least one intermediate terminal member (103) comprises the distribution cavity (20) at the inner side (A), the first connection elements (104) and/or the second connection elements (105), and at least one vent port (31).

6. Terminal block (100) according to claim 5 when dependent on claim 3, wherein
the at least one intermediate terminal member (103) is detachably attached between the first terminal member (101) and the second terminal member (102) by the first connection elements (104) and the second connection elements (105).

7. Terminal block (100) according to any of the previous claims, further comprising:
a plurality of interface extensions (30) extending on the inner side (A) and providing a fluid connection with the vent ports (31) defining at least part of the second pathway (PW2).

8. Terminal block (100) according to claim 1 and any of claims 5 to 7 when dependent on claim 3, wherein
at least one of the first terminal member (101), the second terminal member (102) and the intermediate terminal member (103) comprise fastening pins (40), wherein the fastening pins (40) fastens a busbar (50) to at least one of the first terminal member (101), the second terminal member (102) and the intermediate terminal member (103).

9. Terminal block (100) according to claim 5 and 3, wherein
at least one of the first terminal member (101), the second terminal member (102) and the intermediate terminal member (103) comprises at least one grounding port (70) connecting the inner side (A) and the outer side (B).

10. Terminal block (100) according to any of the previous claims, further comprising:
a plurality of support members (60) at the inner side (A); and
a main datum (43) provided at the first terminal member (101).

11. Terminal block (100) according to any of the previous claims, further comprising:
a battery management system (BMS) and a plurality of mounting holes (106) at the outer side (B), wherein the battery management system (BMS) is mounted to the first terminal member (101) via the mounting holes (106).

12. Battery pack (200) comprising:
a terminal block (100) according to claims 1 to 11;
a base plate (90) comprising a surface (91), a plurality of recesses (93) and an at least one inner channel (92);
a plurality of energy storage units (15) disposed on the surface (91); and
a plurality of cooling snakes (65) contacting at least one of the plurality of energy storage units (15); wherein
the terminal block (100) and the base plate (90) provide a first pathway (PW1) and a second pathway (PW2), and wherein the first pathway (PW1) and the second pathway (PW2) are not in fluid contact with each other.

13. Battery pack (200) according to claim 12, wherein
the first pathway (PW1) is defined by an inlet port (10) and a distribution cavity (20) of the terminal block (100) and the plurality of recesses (93), and the second pathway (PW2) is defined by the at least one inner channel (92) and vent ports (31) of the terminal block (100).

14. Battery pack (200) according to one of claim 12 or 13, wherein
the cooling snakes (65) are supported at the battery pack (200) by support members (60) of the terminal block (100).

15. Battery pack (200) according to any one of claims 12 to 14, wherein
the cooling snakes (65) are connected to a grounding port (70) of the terminal block (100) by a wire (67) and wherein the wire (67) is disposed in the distribution cavity (20).

16. Battery pack (200) according to any one of claims 12 to 15, further comprising:
a rear block (230) provided opposite to the terminal block (100), the rear block (230) comprising:
a first rear member (231) having at least one of a coolant inlet port (235) and a coolant outlet port (236) connecting an inner side (A) and an outer side (B) of the rear block (230);
a plurality of vent ports (31) provided on the outer side (B) and connected with the inner side (A),
wherein the plurality of vent ports (31) of the rear block (230) is part of the second pathway (PW2).

17. Battery pack (200) according to any one of claims 12 to 16, further comprising:
an interconnection (210) connecting at least one energy storage cell (15) with a battery management system (BMS) of the terminal block (100).

18. Electric system (ES) comprising a battery pack (200) according to claims 12 to 17.
